# EUROPEAN PATENT APPLICATION

(11) **EP 1 862 831 A1**
(43) Date of publication of application: **05.12.2007**
(21) Application number: 07252071.1
(22) Date of filing: 18.05.2007
(51) Int. Cl.: G02B 6/42, B23K 26/42

(54) **Optical fiber holding apparatus and fiber laser processing apparatus**

(30) Priority: 30.05.2006 JP 2006149777
(71) Applicant: MIYACHI TECHNOS CORPORATION, Noda-shi, Chiba-ken (JP)
(72) Inventor: Matsuda, Yasushi, Noda-shi Chiba-ken (JP); Shimada, Hidenori, Noda-shi Chiba-ken (JP); Akagi, Masayuki, Noda-shi Chiba-ken (JP)
(74) Representative: Makovski, Priscilla Mary

(57) **Abstract**

One end of an optical fiber for oscillation (22) is held in a holding groove (80) having a V-shaped section, which holding groove (80) is formed on the upper face of a lower block (76). On an upper block (74), a slit (96) is formed opposite the holding groove (80) of the lower block (76). A sapphire rod (94) can be inserted from above into the slit (96), and is guided vertically in a slidable manner in the slit. The sapphire rod (94) is brought in contact with the upper face of the optical fiber for oscillation (22), and is supported to be slidable over both side inner wall surfaces at the lower end of the slit (96). Bolts (100) are used to adjust a spring pressure of a compressive coil spring (102), which in turn adjusts a press force against the optical fiber for oscillation (22).

## Description

### BACKGROUND OF THE INVENTION

### 1. Field of the Invention

The present invention relates generally to an optical fiber holding apparatus that holds an optical fiber, and more particularly, to an optical fiber holding apparatus for a fiber laser and a fiber laser processing apparatus using the optical fiber holding apparatus.

### 2. Description of the Related Art

A fiber laser processing apparatus has been put in practical use in recent years. The fiber laser processing apparatus emits laser light generated by a fiber laser onto a workpiece to carry out desired laser processing on the workpiece.

In general, according to a fiber laser used in a fiber laser processing apparatus, an optical fiber for oscillation having a core doped with a rare earth element is disposed optically between a pair of optical resonator mirrors, and the core of the optical fiber is optically excited to cause oscillation light having a given wavelength to come axially out of the end faces of the core and reciprocate repeatedly between the optical resonator mirrors to be amplified in oscillation, thus coherent laser light is put out of one optical resonator mirror (partial reflection mirror or output mirror). Usually, an optical lens is disposed between each end face of the fiber and each optical resonator mirror, so that oscillation light reflected by the optical resonator mirror is concentrated (converged) with the optical lens to be sent back to each core end face of the optical fiber for oscillation. For optical excitation of the core of the optical fiber for oscillation, an LD end face exciting method is employed. According to this method, a laser diode (LD) is used as an excitation light source, and LD light (excitation light) is condensed and caused to fall onto a core end face via the optical resonator mirror and optical lens.

For such a fiber laser as described above, an optical fiber holding apparatus holding both ends of the optical fiber for oscillation at a given position is used to carry out precise optical alignment or coupling between the end faces of the optical fiber and the optical resonator mirrors and LD for excitation. Conventionally, according to this type of optical fiber holding apparatus, each end of the optical fiber for oscillation is inserted into a sleeve, and locking machine screws are screwed into the sleeve to fix the optical fiber.

According to the above conventional optical fiber holding apparatus, however, fixing the optical fiber for oscillation with the locking machine screws causes the concentration of a stress on one spot on the optical fiber for oscillation, which bends a path for light in the optical fiber, leading to heat generation. Besides, since the outer periphery of the optical fiber for oscillation is covered with the sleeve, heat dissipation performance and cooling performance becomes inferior. In the fiber laser, particularly, when reflected light or return light from the optical resonator mirrors falls onto the core end faces each about 10 µm in diameter, resulting power density is extremely high. Because of this, heat builds up easily on each end of the fiber, which may cause a decline in laser oscillation efficiency and/or the degradation or breakage of the fiber. In addition, in the laser processing apparatus, reflected light from a processing point on a workpiece may propagate in a backward direction through a laser emitting unit and a laser transmission system to be incident on an end face of the optical fiber for oscillation. Such external light not only applies thermal shock to a core end face but also propagates through the fiber as abnormal light, causing the fluctuation of laser oscillation characteristics and the deterioration and breakage of the fiber.

### SUMMARY OF THE INVENTION

The present invention was conceived in view of the above problems of conventional techniques, and it is therefore an object of the present invention to provide an optical fiber holding apparatus that is superior in holding performance and heat dissipation performance related to an optical fiber for a fiber laser, and is capable of eliminating abnormal light effectively.

Another object of the present invention is to provide a fiber laser processing apparatus that reduces the degradation and breakage of an optical fiber to improve processing quality and productivity.

To achieve the above objects, the optical fiber holding apparatus of the present invention has a core containing a light-emitting element, and holds an optical fiber that receives excitation light for exciting the core at an end face of the fiber. The optical fiber holding apparatus includes a holder body that has a holding groove for holding an end of the optical fiber, and a presser member made of a material having a refraction factor larger than that of the optical fiber, which presser member presses the optical fiber from above the holding groove.

According to the above configuration, the optical fiber is held between the holding groove and the presser member, so that the optical fiber is held stably under a uniform press force without being subjected to a local stress. Since the presser member in contact with the optical fiber has the refraction factor larger than that of the optical fiber, undesired light or abnormal light incident on an end face of the optical fiber can be lead through the presser member to the outside without being reflected totally on the contact surface or boundary surface between the optical fiber and the presser member. This stabilizes laser oscillation (or amplification) characteristics inside the optical fiber, thus prevents the degradation and breakage of the optical fiber.

The presser member according to the present invention should preferably have a rodlike shape with a rectangular section, and be 30 mm or more, more preferably, 50 mm or more in length. This allows the presser member to come in stable and sufficient contact with the optical fiber. The presser member should most preferably be made of a sapphire having superior heat conductivity, and may be made of a YAG (Yttrium Aluminum Garnet) crystal. To facilitate the discharge of abnormal light from the optical fiber to the presser member, the end of the optical fiber should preferably be stripped of a sheath to expose a clad and the presser member be brought in contact with the exposed clad.

According to a preferred mode of the present invention, the optical fiber holding apparatus further includes a spring member that applies a press force to the presser member, and a spring pressure adjusting unit that can adjust the spring force of the spring member. Implementation of such spring pressure application enhances the adhesion between the optical fiber and the presser member and between the optical fiber and the holding groove, thus improving an optical effect and a heat dissipation effect. The holding groove should preferably have a V-shaped section in a viewpoint of secure and stable alignment.

According to a preferred mode, the holder body has a screw hole formed above the holding groove, the spring pressure adjusting unit has a bolt screwed into the screw hole from above, and the spring member has a compressive coil spring disposed between the lower face of the bolt and the upper face of the-presser member. The holder body should preferably have a lower block that supports the optical fiber placed thereon, and an upper block that is mounted removably on the upper face of the lower block. The holding groove is formed on the upper face of the lower block, and the screw hole is formed on the upper block. The upper block has an opening formed in the place that is counter to the holding groove of the lower block, the opening being formed for inserting the pressure member from above into the opening. The presser member can be guided along the inner wall surfaces of the opening to be inserted and adjusted in position.

The holder body should preferably be made of a material having high heat conductivity. The holder body may be provided with a cooling water channel, and cooling water flowing through the cooling water channel dissipates heat from the optical fiber in the adoption of a water cooling method.

The fiber laser processing apparatus of the present invention includes an optical fiber for oscillation or amplification that has a core containing a light-emitting element, the optical fiber holding apparatus of the present invention, an exciting unit that emits excitation light onto an end face of the optical fiber, the excitation light exciting the core, and a laser emitting unit that condenses and emits laser light onto a processing point on a workpiece, the laser light being extracted from the optical fiber.

According to the above configuration, laser light in a stable beam mode can be obtained from the optical fiber and the degradation and breakage of the optical fiber is reduced as well. This allows an improvement in processing quality and productivity.

The above configuration and effect allows the optical fiber holding apparatus of the present invention to offer improved holding performance and heat dissipation performance related to the optical fiber for a positive fiber laser, and also to eliminate abnormal light effectively to improve laser characteristics. The above configuration and effect allows the fiber laser processing apparatus of the present invention to reduce the degradation and breakage of the optical fiber to improve processing quality and productivity.

### BRIEF DESCRIPTION OF THE DRAWINGS

The above and other objects, aspects, features and advantages of the present invention will become more apparent from the following detailed description when taken in conjunction with the accompanying drawings, in which:
Fig. 1 depicts the configuration of a fiber laser processing apparatus according to an embodiment of the present invention;
Fig. 2 is a top view of an optical fiber holder according to the embodiment;
Fig. 3 is a top view of a lower block from which an upper block is removed in the optical fiber holder of the embodiment;
Fig. 4 is a sectional view of Fig. 2 along an A-A line;
Fig. 5 is a sectional view of Fig. 2 along an B-B line;
Fig. 6 is a partially magnified sectional view of a magnification of the primary part of a mechanism that holds an optical fiber for oscillation in the optical fiber holder of the embodiment;
Fig. 7 is a schematic side view of the contact relation between a presser member and the optical fiber for oscillation in the optical fiber holder of the embodiment;
Fig. 8 is a sectional view of the structure of the optical fiber for oscillation used in the embodiment;
Fig. 9 is a schematic side view of an optical effect resulting in one optical fiber holder of the embodiment; and
Fig. 10 is a schematic side view of an optical effect resulting in the other optical fiber holder of the embodiment.

### DESCRIPTION OF THE PREFERRED EMBODIMENTS

A preferred embodiment of the present invention will now be described with reference to the accompanying drawings.

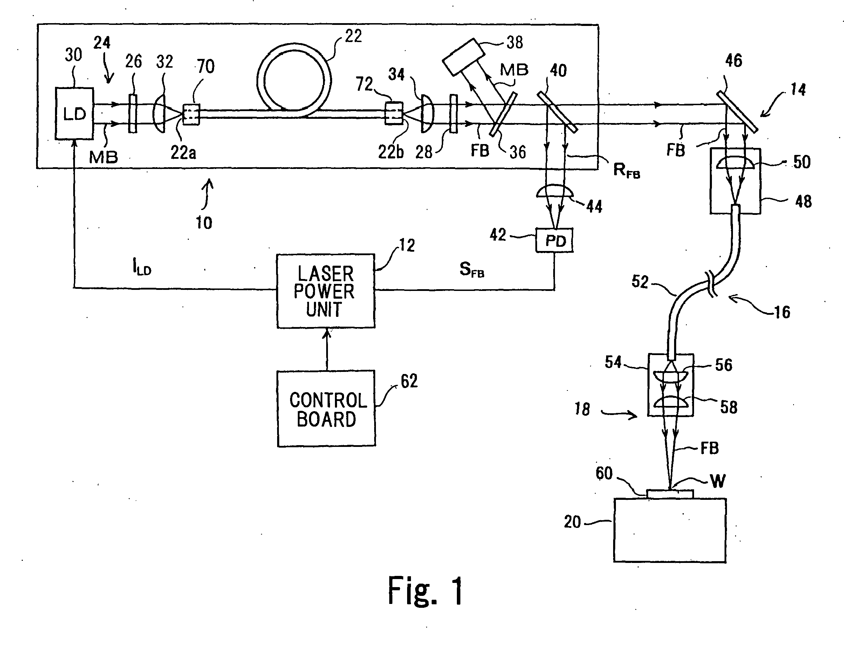

Fig. 1 depicts the configuration of a fiber laser processing apparatus according to an embodiment of the present invention. The fiber laser processing apparatus includes a fiber laser oscillator 10, a laser power unit 12, a laser incident unit 14, a fiber transmission system 16, a laser emitting unit 18, and a processing table 20.

The fiber laser oscillator 10 has an optical fiber for oscillation (hereinafter "oscillation fiber") 22, an electro-optic exciting unit 24 that emits excitation light MB for pumping onto one end face of the oscillation fiber 22, and a pair of optical resonator mirrors 26 and 28 that are optically opposite to each other across the oscillation fiber 22. Both ends of the oscillation optical fiber 22 are held with the optical fiber holders 70 and 72, respectively. The optical fiber holders 70 and 72 constitute an optical fiber holding apparatus of the present embodiment, and the configuration and effect of the optical fiber holders 70 and 72 will be described in detail later.

The electro-optic exciting unit 24 has a laser diode (LD) 30 and a condensing optical lens 32. The LD 30 is driven for light emission with an excitation current I_{LD} from the laser power unit 12, putting out in oscillation laser light MB for excitation. The number of LD elements composing the LD 30 is determined in a desirable manner, and the LD elements may be arranged in an array structure or a stack structure. The optical lens 32 condenses laser light MB for excitation from the LD 30 and causes laser light MB to fall onto one end face of the oscillation fiber 22. The optical resonator mirror 26, which is disposed between the LD 30 and the optical lens 32, allows incoming laser light MB for excitation from the LD 30 to penetrate through the resonator mirror 26, while totally reflects incoming oscillation light from the oscillation fiber 22 on the axis of the resonator.

The oscillation fiber 22, as it will be described later, has a core doped with a given light-emitting element, and a clad encircling the core concentrically. The core serves as an active medium, and the clad serves as a propagation light path for excitation light. Laser light MB for excitation incident on one end face of the oscillation fiber 22, as described above, propagates axially inside the oscillation fiber 22 while being enclosed in the clad by total reflection at a boundary surface on the outer peripheral surface of the clad. While propagating on, laser light MB traverses the core repeatedly to optically excite the light-emitting element in the core. As a result, oscillation light having a given wavelength is emitted axially from both end faces of the core, and reciprocates repeatedly between the optical resonator mirrors 26 and 28, thus amplified in resonation. Hence fiber laser light FB having the given wavelength is extracted from one optical resonator mirror 28, which is composed of a partial reflection mirror.

The optical lenses 32 and 34 collimate oscillation light emitted out of the end faces of the oscillation fiber 22 into parallel light, send collimated oscillation light to the optical resonator mirrors 26 and 28, and condense oscillation light reflected backward by the optical resonator mirrors 26 and 28 onto the end faces of the oscillation fiber 22. Laser light MB for oscillation having passing through the oscillation fiber 22 penetrates the optical lens 34 and optical resonator mirror 28, and then is turned by a turning mirror 36 toward a laser absorber 38 at the side of the turning mirror 36.

Fiber laser light FB put out of the optical resonator mirror 28 penetrates the turning mirror 36 straight through, and passes through a beam splitter 40, then proceeds into the laser incident unit 14.

The beam splitter 40 reflects part (e.g., 1%) of incident fiber laser light FB in a given direction, i.e., toward a light-receiving element for power monitoring, such as photodiode (PD) 42. A condensing lens 44 may be disposed in front of the photodiode (PD) 42, where the condensing lens 44 condenses reflected light or monitor light RFB from the beam splitter 40.

The photodiode (PD) 42 photoelectrically converts monitor light R_{FB} from the beam splitter 40 to put out an electric signal (laser power measurement signal) S_{FB} that represents the laser power (peak power) of fiber laser light FB, and gives the signal S_{FB} to the laser power unit 12. The laser power unit 12 receives the laser power measurement signal S_{FB} from the photodiode (PD) 42 as an input feedback signal, and controls an excitation current I_{LD} to the LD 30 in real time so that the laser power of fiber laser light FB conforms to or follows a user-desired laser power preset value or preset waveform, which is input from a control board 62. Under this real-time power feedback control, the laser power of fiber laser light FB put out in oscillation from the fiber laser oscillator 10 is kept at the preset value to carry out desired wavelength control precisely according to setting even if such a trouble as degradation of the LD 30 and a wavelength shift occurs.

Fiber laser light FB entering the laser incident unit 14 is turned first by a bent mirror 46 in a given direction, and then is condensed by a condensing mirror 50 in an incident unit 48 to be incident on one end face of a transmission optical fiber (hereinafter "transmission fiber") 52 of the fiber transmission system 16. The transmission fiber 52 is, for example, an SI (step index) type fiber, transmitting fiber laser light FB, which has come into the transmission fiber 52 in the incident unit 48, to an emitting unit 54 of the laser emitting unit 18.

The emitting unit 54 has a collimator lens 56 that collimates fiber laser light FB coming out of the terminal face of the transmission fiber 52 into parallel light, and a condensing lens 58 that condenses parallel fiber laser light FB onto a given focus point. The emitting unit 54 thus condenses and emits fiber laser light FB onto a processing point W on a workpiece 60 placed on a processing table 20.

In a case of laser welding, for example, the laser power unit 12 supplies an excitation current of pulse waveform to the LD 30, which causes the LD 30 to supply laser light MB of pulse waveform for excitation to the oscillation fiber 22 in the fiber laser oscillator 10, thus fiber laser light FB of pulse waveform is put out in oscillation from the fiber laser oscillator 10. This fiber laser light FB of pulse waveform is condensed and emitted onto the processing point W on the workpiece 60 via the laser incident unit 14, the fiber transmission system 16, and the laser emitting unit 18. At the processing point W, the energy of fiber laser light FB of pulse waveform melts the material of the workpiece. Following the pulse emission, the melted material solidifies to form a nugget.

In this fiber laser processing apparatus, the oscillation fiber 22 causes a long and narrow core having a bore of about 10 µm and a length of about several meters to serve as an active medium, thus capable of putting out in oscillation fiber laser light FB with a thin beam diameter and a small beam spread angle. Excitation laser light MB incident on one end face of the oscillation fiber 22 traverses the core again and again to use up excitation energy while propagating through the long light path of several meters. This allows the generation of fiber laser light FB at high oscillation efficiency. In addition, the core of the oscillation fiber 22 does not cause a thermal lens effect, which allows the fiber laser oscillator 10 to operate in a very stable beam mode.

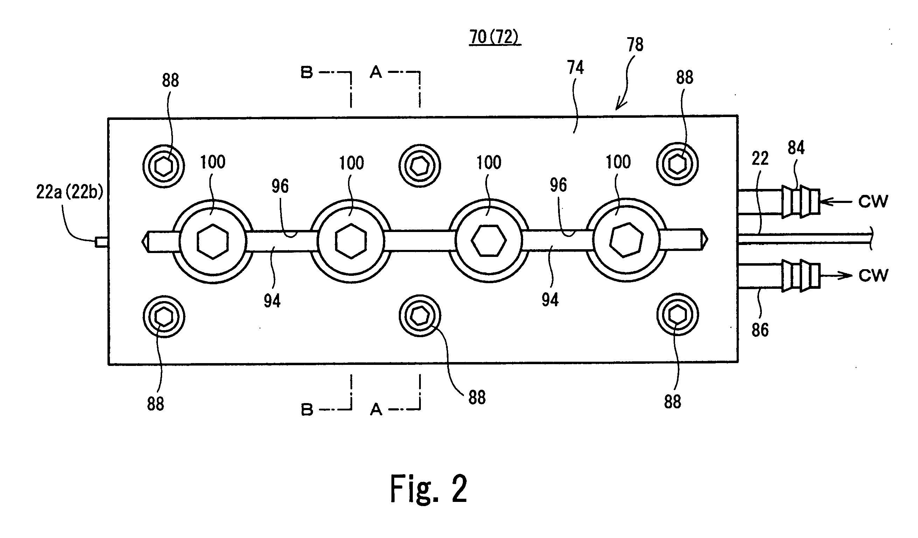

The configuration of the optical fiber holders 70 and 72 according to the present invention will then be described referring to Figs. 2 to 7.

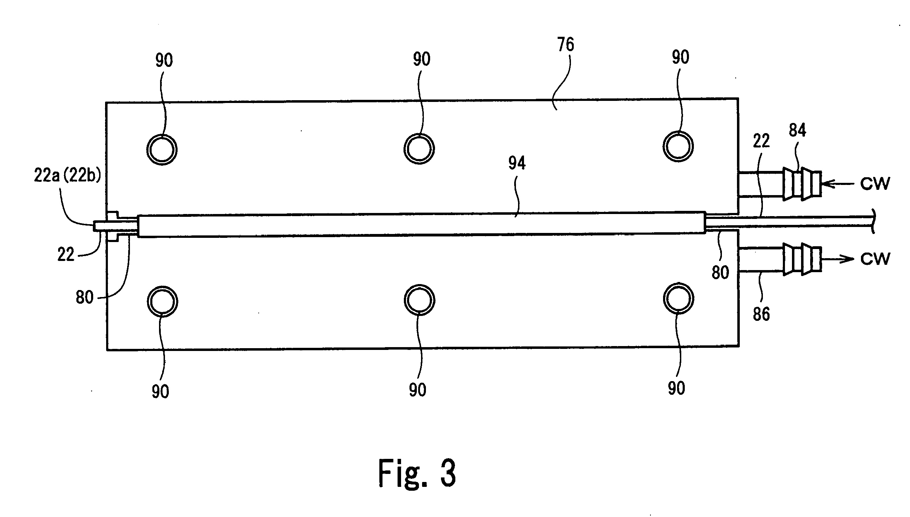

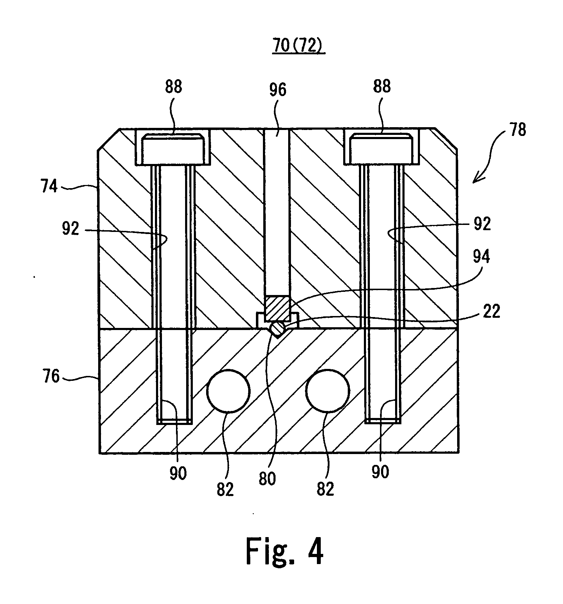

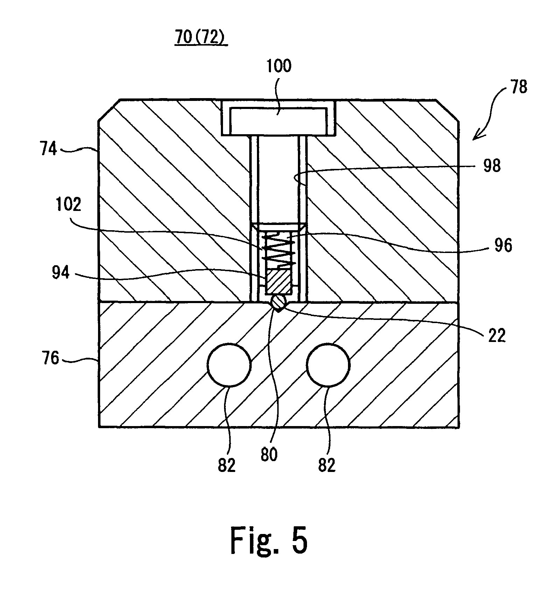

Figs. 2 to 6 depict the configuration of the optical fiber holders 70 and 72. Fig. 2 is a top view of the whole of the holder, Fig. 3 is a top view of a lower block from which an upper block is removed, and Figs. 4 and 5 depict a sectional view of Fig. 2 along an A-A line and a sectional view of Fig. 2 along a B-B line, respectively. The optical fiber holders 70 and 72 may have the identical structure.

The optical fiber holder 70 (72) is formed into a laterally elongated approximate rectangular parallelepiped extending in the fiber axis direction so that the optical fiber holder 70 (72) holds each of both ends of the oscillation fiber 22 over a given length (Figs. 1 and 2).

The optical fiber holder 70 (72) has a holder body 78, which is divided into an upper block 74 and a lower block 76 (Figs. 3 and 4) . Both blocks 74 and 76 are made of a material having high heat conductivity, such as copper or aluminum.

A holding groove 80 having a V-shaped section is formed on the upper surface of the lower block 76, the holding groove 80 running straight through the upper surface longitudinally along its center. One end of the oscillation fiber 22 is housed and held in this holding groove 80 with the lower half of the one end buried in (upper half of the one end exposed out of) the holding groove 80 (Figs. 3 to 5). A cooling water channel 82 is formed inside the lower block 76 (Figs. 4 and 5), and pipeline connectors 84 and 86 are attached to the entrance and the exit of the channel 82, respectively (Figs. 2 and 3). Cooling water CW of a prescribed temperature is supplied to circulate through the channel 82 in the lower block 76, cooling each component in contact directly or indirectly with the lower block 76, such as the oscillation fiber 22, upper block 74, and sapphire rod 94 which will be described later.

The upper block 74 is so superposed on the lower block 76 that the lower face of the upper block 74 is stuck closely to the upper face of the lower block 76, and the superposed upper block 74 is fixed with a plurality of mounting bolts 88 (Figs. 2 and 4). For joining these blocks, screw holes 90, into which the mounting bolts 88 are screwed, are formed at left/right sides of the holding groove 80 on the upper face of the lower block 76 (Figs. 3 and 4), and through-holes 92, through which the mounting bolts 88 are inserted, are formed on the upper block 74. The upper block 74 is also provided with a slit 96 formed in the place counter to the holding groove 80 of the lower block 76, in which slit 96 the sapphire rod 94 can be inserted from above and is guided vertically in a slidable manner (Figs. 2 and 4). The sapphire rod 94 is shaped into a square rod having a sectional size larger than that of the oscillation fiber 22, comes in contact from above with the upper face of the oscillation fiber 22 housed in the holding groove 80 on the lower block 76, and is supported to be slidable over both side inner wall surfaces at the lower end of the slit 96. The longer the sapphire rod 94 is, the larger the contact face between the sapphire rod 94 and the oscillation fiber 22 becomes. The larger contact face not only disperses and uniforms a stress applied to the oscillation fiber 22, but also improves an abnormal light discharge effect and a heat dissipation effect, which will be described later. The length of the sapphire rod 94, therefore, should preferably be at least 30 mm or more, and more preferably, determined to be 50 mm or more. Usually, the length of 50 mm to 100 mm suffices.

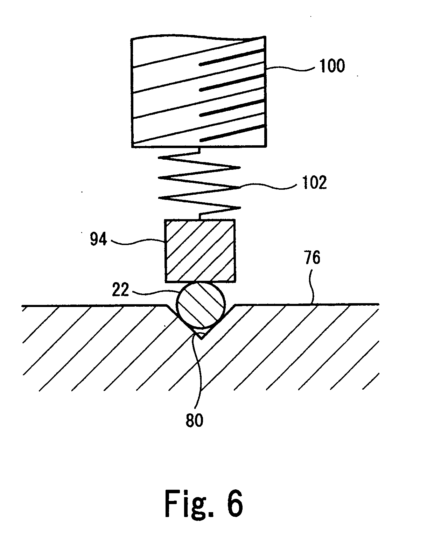

On the upper block 74, screw holes 98. are formed at a plurality of spots (four spots are shown) at constant intervals on the slit 96, and spring pressure adjusting bolts 100 are screwed from above into the screw holes 98 (Figs. 2 and 5). Each bolt 100 has a compressive coil spring 102 fitted on the lower end of the bolt 100, and the lower end of the coil spring 102 comes in contact with the upper face of the sapphire rod 94 (Figs. 5 and 6). Changing an extent of screwing of the bolt 100, therefore, adjusts the spring pressure of the compressive coil spring 102, that is, adjusts a press force against the oscillation fiber 22 in any desirable manner.

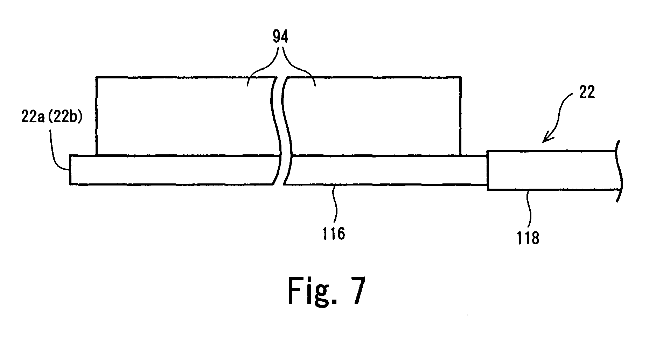

As shown in Fig. 7, each of both ends of the oscillation fiber 22 is stripped of a shading sheath 118, which will be described later, at the part in contact with the sapphire rod 94 to expose a translucent outer clad 116 inside the sheath.

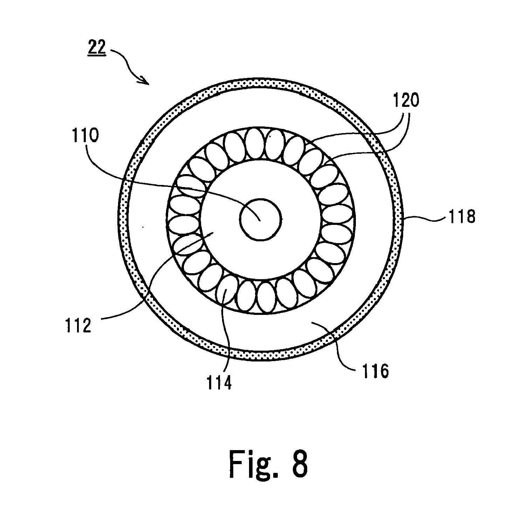

Fig. 8 depicts the structure of the oscillation fiber 22 according to the present embodiment. As shown in Fig. 8, the oscillation fiber 22 includes the core 110 extending along the axis of the oscillation fiber 22, an inner clad 112 concentrically encircling the core 110, an air layer 114 encircling the inner clad 112, and the outer clad 116 encircling and holding the air layer 114, and the sheath 118 encircling the outer clad 116.

The core 110 is made of, for example, a quartz glass doped with such a rare earth element ion as Nd³⁺, the inner clad 112 is made of, for example, a quartz glass, the outer clad 116 is made of, for example, a multicomponent glass, and the sheath 118 is made of a shading resin. The Air layer 114 is composed of hollow fibers 120 densely arranged circumferentially, which are made of such a material as quartz glass having a refraction factor identical with or close to that of the inner clad 112. Each hollow fiber (quartz glass) 120 is fusion welded to the inner clad (quartz glass) 112. Both end faces of the hollow fiber 120 is closed to cut off air inside the fiber 120 from the fresh air.

According to the present invention, each of both ends of the oscillation fiber 22 is stripped of the sheath 118 to expose the outer clad 116, and the outer clad exposure portion is brought in contact with the sapphire rod 94 in each optical fiber holder 70 and 72, as described in Fig. 7. The outer clad 116 and the sapphire rod 94 are in contact with each other in a relation that the refraction factor of the sapphire rod 94 (about 1.8) is larger than that of the outer clad 116 (usually about 1.5).

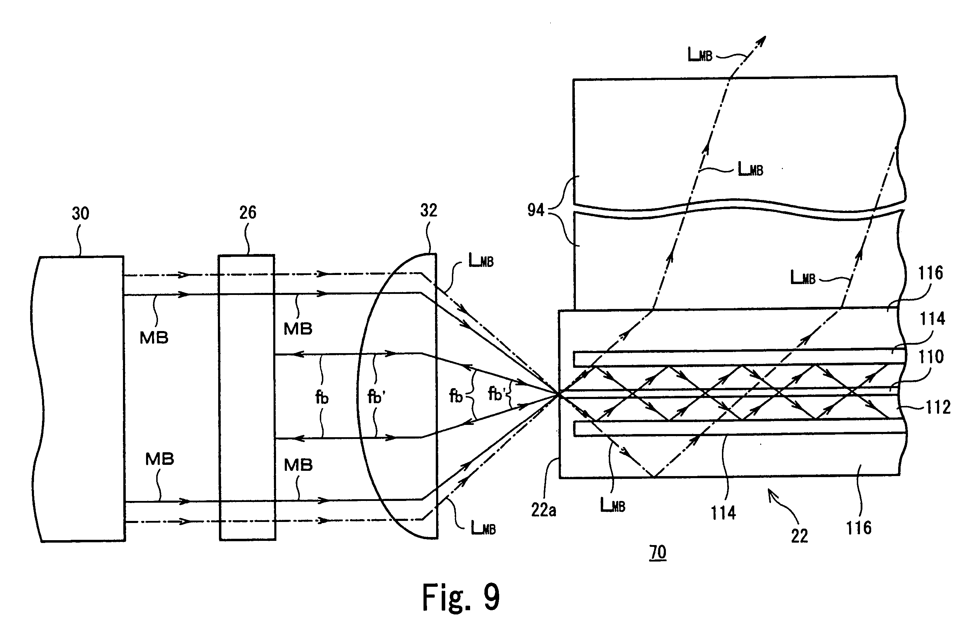

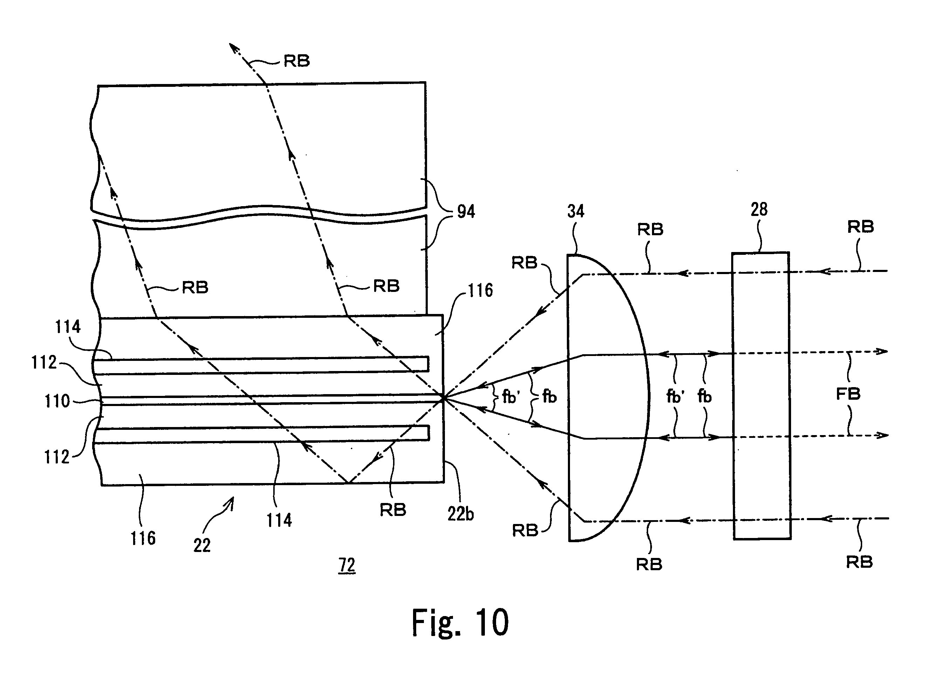

The effect, especially the optical effect of the optical fiber holders 70 and 72 according to the present embodiment will then be described referring to Figs. 9 and 10.

At the optical fiber holder 70 closer to the LD 30, as shown in Fig. 9, laser light MB for excitation from the LD 30 penetrates the optical resonator mirror 26 straight through, is converged by the optical lens 32, and falls onto an end face 22a of the oscillation fiber 22. Laser light MB then propagates axially inside the inner clad 112 while repeatedly reflecting totally from the boundary surface between the inner clad 112 and the air layer 114. The numerical aperture NA of the oscillation fiber 22 to excitation light MB is determined by the refraction factor of the inner clad 112 and that of the air layer 114. Since the air layer 114 has the minimum refraction factor of 1, the numerical aperture NA of the oscillation fiber 22 is determined to be about 0.55, which is approximately 120% of the numerical aperture (about 0.45) of a conventional double-clad fiber (DCF). This widely improves optical coupling efficiency in an LD end face exciting method, achieving emission of high power fiber laser light FB.

Oscillation light fb, which has a given spread angle and comes out of an end face of the core 110 of the oscillation fiber 22 along the optical axis, is collimated by the optical lens 32, and is reflected by the optical resonator mirror 26 ahead of the optical lens 32, thus sent back in the axially reverse direction. Return oscillation light fb' reflecting from the optical resonator mirror 26 then falls onto the optical lens 32 from the back thereof, which lens 32 converges return oscillation light fb' to cause it to be incident on the end face of the core 110. Oscillation light fb' entering the core 110 propagates axially inside the core 110 while totally reflecting repeatedly from the boundary surface (not shown) between the core 110 and the inner clad 112.

Excitation light MB from the LD 30 may contain undesirable light, i.e., abnormal light L_{MB} that is incident on the end face 22a of the oscillation fiber 22 at an incident angle exceeding the maximum incident angle. Coming into the oscillation fiber 22, this abnormal light LMB does not reflect from the boundary surface between the inner clad 112 and the air layer 114 but passes through the boundary surface to proceeds to the air layer 114 and comes into the outer clad 118. Abnormal light L_{MB} coming into the outer clad 118 then reaches the contact face or boundary surface between the outer clad 118 and the sapphire rod 94, where abnormal light L_{MB} does not reflect totally on the boundary surface but passes through the boundary surface into the sapphire rod 94 (because the refraction factor of the sapphire rod 94 is larger than that of the outer clad 118). Meanwhile, abnormal light L_{MB} reaching the part of outer peripheral surface of the outer clad 118 that is not in contact with the sapphire rod 94 is reflected totally on the boundary surface between the outer peripheral surface and the outside air, being sent back into the clad (because the refraction factor of the outside air is smaller than that of the outer clad 118). Abnormal light L_{MB} coming into the sapphire rod 94 gets out of the sapphire rod 94 via its upper face or side face.

Meanwhile, at the optical fiber holder 72 closer to the fiber laser output end, as shown in Fig. 10, oscillation light fb, which has a given spread angle and comes out of an end face of the core 110 of the oscillation fiber 22 along the optical axis, is collimated by the optical lens 34, and is reflected by the optical resonator mirror (output mirror) 28 ahead of the optical lens 34, thus sent back in the axially reverse direction. Part of oscillation light fb is, however, passes through the optical resonator mirror 28 to come out as fiber laser light FB. Then, return oscillation light fb' reflecting from the optical resonator mirror 28 falls onto the optical lens 34 from the back thereof, which lens 34 converges return oscillation light fb' to cause it to be incident on the end face of the core 110. Oscillation light fb' entering the core 110 propagates axially inside the core 110 while totally reflecting repeatedly from the boundary surface (not shown) between the core 110 and the inner clad 112.

At the optical fiber holder 72, reflected light RB from the processing point W on the workpiece 60 (Fig. 1) may propagates in reverse to the propagation direction of fiber laser light FB through the laser emitting unit 18, fiber transmission system 16, laser incident unit 14, optical resonator mirror (output mirror) 28, and optical lens 34 to fall onto an end face 22b of the oscillation fiber 22 as abnormal light. This abnormal light RB, which comes into the oscillation fiber 22 and reaches the contact face between the outer clad 118 and the sapphire rod 94, however, does not reflect totally on the contact face but proceeds into the sapphire rod 94 having a larger refraction factor, traveling further through the sapphire rod 94 to the outside.

As described above, according to the optical fiber holders 70 and 72, when abnormal light L_{MB} or RB is incident on the end of the oscillation fiber 22, the sapphire rod 94 absorbs abnormal light L_{MB} or RB at the fiber end just after the incidence of abnormal light L_{MB} or RB to lead abnormal light LMB or RB to the outside. This prevents and reduces the propagation of abnormal light L_{MB} and RB through the inside of the oscillation fiber 22, thus keeps laser oscillation characteristics stable.

Besides the above abnormal light L_{MB} and RB, return light fb' from the optical resonator mirrors 26 and 28 and excitation light MB from the LD 30 also poses the problem that the high density optical energy of return light fb' and excitation light MB produces thermal shock, giving heat to the oscillation fiber 22 (especially to the core 110) to cause both ends of the fiber 22 to generate heat when return light fb' and excitation light MB is incident on the end faces 22a and 22b of the oscillation fiber 22. In this case, as described above, the cooling water WC supplied to the channel 82 in the lower block 76 absorbs the heat generated at both ends of the oscillation fiber 22 to discharge the heat out of the holder. The oscillation fiber 22 is cooled or deprived of heat directly through the contact face to the sapphire rod 94 and to the holding groove 80 of the lower block 76. The sapphire rod 94 has superior heat conductivity as the lower block 76 made of copper or aluminum, etc. , capable of quickly absorbing heat generated from the oscillation fiber 22 to dissipate the heat to the upper block 74 and to the lower block 76. In this manner, the degradation and breakage of both ends of the oscillation fiber 22 due to heat generation can be prevented effectively.

As described above, according to the optical fiber holder 72 of the present embodiment, the holder body 78 is divided into upper and lower blocks 74 and 76, the V-shaped holding groove 80 formed on the lower block 76 holds the oscillation fiber 22, and the sapphire rod 94 presses the oscillation fiber 22 from above the holding groove 80 over a given length (preferably 50 to 70 cm) of the oscillation fiber 22. The oscillation fiber 22, therefore, can be fixed and held stably under a uniform press force. When abnormal light falls onto an end face of the oscillation fiber 22, incoming abnormal light can be lead out of the oscillation fiber 22 via the sapphire rod 94. This prevents a decline in laser oscillation characteristics and the degradation and breakage of the fiber due to abnormal light. In addition, heat generated at the ends of the oscillation fiber 22 is released not only through the holding groove 80 but also through the sapphire rod 94 effectively. This effectively prevents the degradation and breakage of the oscillation fiber 22 due to heat generation.

The fiber laser processing apparatus according to the present embodiment allows the fiber laser oscillator 10 to provide fiber laser light FB in a stable beam mode, and reduces failures in the fiber laser oscillator 10, especially the degradation and breakage of the oscillation fiber 22. The fiber laser processing apparatus thus improves processing quality and productivity.

The description of the preferred embodiment of the present invention made heretofore is not intended to limit the present invention. Those skilled in the art are allowed to make various modifications and alterations of the present invention in specific modes of implementation, provided that the modifications and alterations do not deviate from the technical idea and scope of the present invention.

For example, the sapphire rod 94 can be replaced with a YAG rod in the optical fiber holders 70 and 72. A YAG crystal has a refraction factor of about 1.8, offering an optical effect (abnormal light discharge effect) as fine as that offered by sapphire. The above embodiment employs a water-cooling method, but an air-cooling method is also applicable. With respect to the fiber laser oscillator 10, modification or partial omission of the oscillation fiber 22, electro-optic exciting unit 24, optical resonator mirrors 26 and 28, optical lenses 32 and 34, etc., is possible, and adopting another configuration offering the same function or effect as those components offer is also possible. The oscillation fiber 22 can be replaced with a double-clad fiber (DCF) . While excitation light is emitted onto one end face 22a (closer to the total refection mirror 26) of the oscillation fiber 22, a method of emitting excitation light onto the other end face 22b (closer to the output mirror 28) opposite to the one end face 22a of the oscillation fiber 22 is possible, and a double-face exciting method of emitting excitation light simultaneously onto both end faces 22a and 22b is also possible. Further, a Q switch may be incorporated into the fiber laser oscillator 10 to generate fiber laser light in the form of Q switch pulse.

The optical fiber holding apparatus of the present invention can apply to a laser (not shown) that operates according to such a method of using an optical fiber having a core containing a light-emitting element as the optical fiber for oscillation does, emitting seed laser light onto one end face of the optical fiber to cause seed laser light to propagate through the core as the core is excited with excitation light, etc., to amplify propagating seed laser light, and extracting high-power laser light from the other end face of the optical fiber.

The fiber laser processing apparatus of the present invention is not limited in use to laser welding, but can apply to such laser processing as laser marking, perforating, and cutting.

While the illustrative and presently preferred embodiment of the present invention has been described in detail herein, it is to be understood that the inventive concepts may be otherwise variously embodied and employed and that the appended claims are intended to be construed to include such variations except insofar as limited by the prior art.

## Claims

1. An optical fiber holding apparatus having a core and holding an optical fiber, the core containing a light-emitting element and the optical fiber receiving excitation light for exciting the core at an end face of the fiber, the optical fiber holding apparatus comprising:
a holder body having a holding groove holding an end of the optical fiber; and
a presser member made of a material having a refraction factor larger than that of the optical fiber, the presser member pressing the end of the optical fiber from above the holding groove.

2. The optical fiber holding apparatus of claim 1, wherein
the end of the optical fiber is stripped of a sheath to expose a clad, and the presser member is brought in contact with the exposed clad.

3. The optical fiber holding apparatus of claim 1 or 2, wherein
the presser member is made of a sapphire.

4. The optical fiber holding apparatus of claim 1 or 2, wherein
the presser member is made of a YAG crystal.

5. The optical fiber holding apparatus of any one of claims 1 to 4, wherein
the presser member has a rodlike shape with a rectangular section.

6. The optical fiber holding apparatus of claim 5, wherein
the presser member is 30 mm or more in length.

7. The optical fiber holding apparatus of claim 6, wherein
the presser member is 50 mm or more in length.

8. The optical fiber holding apparatus of any one of claims 1 to 7, comprising a spring member applying a press force to the presser member.

9. The optical fiber holding apparatus of claim 8, comprising a spring pressure adjusting unit adjusting a spring force of the spring member.

10. The optical fiber holding apparatus of claim 9, wherein
the holder body has a screw hole formed above the holding groove,
the spring pressure adjusting unit has a bolt screwed into the screw hole from above, and
the spring member has a compressive coil spring disposed between a lower face of the bolt and an upper face of the presser member.

11. The optical fiber holding apparatus of claim 10, wherein
the holder body has a lower block supporting the optical fiber placed thereon, and an upper block mounted removably on an upper face of the lower block, and wherein
the holding groove is formed on an upper face of the lower block, and the screw hole is formed on the upper block.

12. The optical fiber holding apparatus of claim 11, wherein
the upper block has an opening formed in a place counter to the holding groove of the lower block, the opening being formed for inserting the pressure member from above into the opening.

13. The optical fiber holding apparatus of claim 12, wherein
an inner wall surface of the opening forms a guide portion guiding the presser member in a slidable manner.

14. The optical fiber holding apparatus of any one of claims 1 to 13, wherein
the holding groove is so formed as to have a V-shaped section.

15. The optical fiber holding apparatus of any one of claims 1 to 14, wherein
the holder body is made of a material having high heat conductivity.

16. The optical fiber holding apparatus of claim 15, wherein
the holder body is provided with a cooling water channel, and cooling water flowing through the cooling water channel dissipates heat from the optical fiber.

17. A fiber laser processing apparatus comprising:
an optical fiber for oscillation or amplification, the optical fiber having a core containing a light-emitting element;
the optical fiber holding apparatus of any one of claims 1 to 16, the holding apparatus holding the optical fiber at a given position;
an exciting unit emitting excitation light onto an end face of the optical fiber, the excitation light exciting the core; and
a laser emitting unit condensing and emitting laser light onto a processing point on a workpiece, the laser light being extracted from the optical fiber.
